# EUROPEAN PATENT APPLICATION

(11) **EP 2 706 294 A1**
(43) Date of publication of application: **12.03.2014**
(21) Application number: 13183079.6
(22) Date of filing: 05.09.2013
(51) Int. Cl.: F22B 31/00

(54) **Pressurized oxy-combustion power boiler and power plant and method of operating the same**

(30) Priority: 06.09.2012 US 201213605299
(71) Applicant: Alstom Technology Ltd, 5400 Baden (CH)
(72) Inventor: Jukkola, Glen D, Glastonbury, CT Connecticut 06033 (US)

(57) **Abstract**

A pressurized oxy-combustion circulating fluidized bed power plant (10) having a circulating fluidized bed boiler (20) is provided. A combustion chamber ((22) of the boiler is in fluid communication with a separator (28) and configured so that solids produced during combustion enter the separator. The power plant further includes an air separation unit (30) that is in fluid communication with the combustion chamber. The air separation unit is configured to supply substantially pure oxygen to the combustion chamber at a pressure greater than 1 bar. An external heat exchanger (40) is in fluid communication with the separator and in fluid communication with the combustion chamber. The external heat exchanger is configured so that a portion of the solids received in the separator pass through the external heat exchanger and transfer heat to a working fluid, after which the solids are returned to the combustion chamber to moderate or control the temperature in the combustion chamber.

## Description

### FIELD OF THE DISCLOSURE

The present disclosure relates to an energy efficient power plant. More specifically, the present disclosure relates to a pressurized oxy-combustion power plant including one or more of a circulating fluidized bed boiler and a circulating moving bed boiler.

### BACKGROUND OF THE DISCLOSURE

Atmospheric oxy-combustion plants need to compress the product carbon dioxide for sequestration or enhanced oil recovery applications. As a result, atmospheric oxy-combustion plants have high parasitic power consumption from the air separation unit and gas processing unit. This design results in high capital costs and plant thermal efficiencies up to 10% points less than an air-fired plant without carbon dioxide capture.

Rather than compress the carbon dioxide at the end of the process, a pressurized oxy-combustion boiler and power plant can be configured to provide the oxygen and fuel to the cycle already at elevated pressures. This prior to combustion reduces the size of all gas-touched equipment, and enables many process improvements - such as enhanced heat transfer, more effective waste heat utilization, and potentially integrated emissions control within the waste heat recovery process itself.

A disadvantage of known pressurized oxy-combustion technologies is that all of these technologies rely upon flue gas recirculation to control the combustion temperature. This requires additional power consumption for the flue gas recirculation fan and also increases the size of the flue gas ducts and pollution control equipment downstream of the combustor.

### SUMMARY OF THE DISCLOSURE

According to aspects illustrated herein, there is provided a pressurized oxy-combustion circulating fluidized bed power plant having a circulating fluidized bed boiler. The boiler includes a combustion chamber and a separator. The combustion chamber is in fluid communication with the separator and is configured so that solids produced during combustion in the combustion chamber enter the separator. The power plant further includes an air separation unit that is in fluid communication with the combustion chamber. The air separation unit is configured to supply substantially pure oxygen to the combustion chamber at a pressure greater than 1 bar. An external heat exchanger is in fluid communication with the separator and in fluid communication with the combustion chamber. The external heat exchanger is configured so that a portion of the solids received in the separator pass through the external heat exchanger and transfer heat to a working fluid, after which the solids are returned to the combustion chamber to provide the primary means of moderating or controlling the temperature in the combustion chamber. A portion of the product gas (mostly CO₂ and H₂O) can be recirculated to the combustion chamber for fluidization. Recirculation gas can also be used for fluidization in the external heat exchanger if necessary.

According to other aspects illustrated herein, there is provided a pressurized oxy-combustion circulating moving bed power plant. The plant includes a circulating moving bed boiler having a combustion chamber and moving bed heat exchanger. The boiler is configured so that the combustion chamber is located in a tower above the moving bed heat exchanger such that solids produced during combustion in the combustion chamber flow downward into the moving bed heat exchanger. An air separation unit is in fluid communication with the combustion chamber. The air separation unit is configured to supply substantially pure oxygen to the combustion chamber at a pressure greater than 1 bar. Solids produced during combustion enter the moving bed heat exchanger and transfer heat to a working fluid, after which the solids are returned to the combustion chamber to provide the primary means of moderating or controlling the temperature in the combustion chamber.

The above described and other features are exemplified by the following figures and detailed description.

### BRIEF DESCRIPTION OF THE DRAWINGS

Referring now to the figures, which are exemplary embodiments, and wherein the like elements are numbered alike:

FIG. 1 is a schematic illustrating a pressurized oxy-combustion circulating fluidized bed power plant; and

FIG. 2 is a schematic illustrating a pressurized oxy-combustion circulating moving bed power plant.

### DETAILED DESCRIPTION OF THE DISCLOSURE

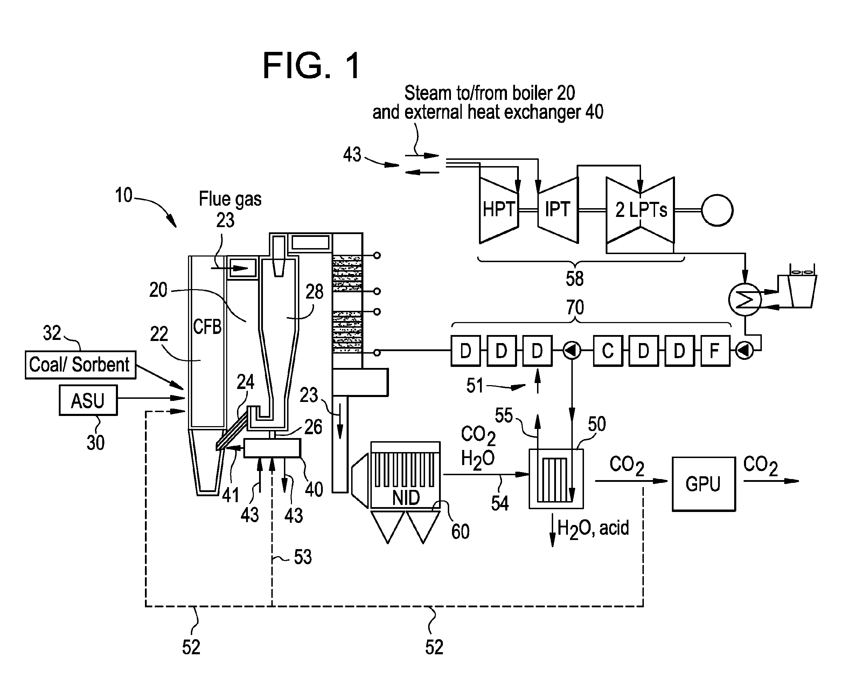

In reference to FIG. 1, a schematic of a pressurized oxy-combustion circulating fluidized bed (CFB) power plant 10 is shown. The power plant 10 includes, among other elements, a CFB boiler 20 including a combustion chamber 22 and a separator 28. An air separation unit (ASU) 30 is in fluid communication with the combustion chamber 22. Substantially pure oxygen is pressurized in the ASU 30 and is then fed to the combustion chamber 22. The term "substantially pure oxygen" is used to refer to air having an oxygen content that is substantially greater than that of atmospheric air. It should be appreciated by a person of ordinary skill in the art that the percentage of oxygen in the delivered air may vary and that it may be less than 100%. In some embodiments the delivered air is 95% oxygen.

In the embodiment shown, the ASU 30 delivers the substantially pure oxygen to the combustion chamber 22 at a pressure greater than 1 bar. In yet further embodiments of the present invention, the ASU 30 delivers the substantially pure oxygen to the combustion chamber 22 at a pressure between 6 and 30 bar. Fuel and sorbent (limestone or dolomite) are dry feed to the combustion chamber 22 by lockhoppers 32 or a solids pump, for example a Stamet's design (not shown in FIG. 1). The oxygen, and resulting combustion products including flue gas 23, remain pressurized during the power plant cycle.

Solids are generated during combustion in the combustion chamber 22. The solids are separated by a separator 28, which can also be referred to as a cyclone. A portion of the collected solids are returned directly to the combustion chamber 22 via conduit 24. The remaining solids pass through an external heat exchanger 40 via a conduit 26. In the embodiment shown, the external heat exchanger 40 is either a fluidized bed heat exchanger or a moving bed heat exchanger. The external heat exchanger 40 is in fluid communication with the separator 28 (via conduit 26) and the combustion chamber 22 via conduit 41. The remaining solids pass through the external heat exchanger 40 where energy is transferred from the solids to a working fluid 43, which is typically steam.

The external heat exchanger 40 could be a fluid bed heat exchanger (FBHE) or a moving bed heat exchanger (MBHE). The FBHE is conventional technology but it behaves as a continuous stirred reactor. The mixed FBHE solids temperature is therefore the same as the FBHE solids discharge temperature. This limits the maximum working fluid temperature (e.g. steam) that can be achieved in the FBHE. It would be difficult to heat steam much beyond 600 - 650 °C at normal circulated fluidized combustion temperatures. The MBHE is a plug flow countercurrent heat transfer device. It has a much higher log mean temperature difference than a FBHE and can therefore achieve much higher temperatures. Temperatures as high as A-USC steam conditions (700 °C) can be achieved in the MBHE. Higher temperatures may be achieved with either heat exchanger if the circulating fluidized bed is operated at higher temperatures. This may be feasible to some extent with certain fuels. Further, pressurized operation may enable somewhat higher temperatures since the sulfur capture mechanism is different under pressure and may have a higher optimum temperature.

The working fluid 43 in boiler 20 and the external heat exchanger 40 is used to drive a steam turbine 58 or a series of steam turbines 58. The cooled solids leaving the external heat exchanger 40 via conduit 41 are returned to the combustion chamber 22 to provide the primary means of moderating or controlling the temperature of combustion in the combustion chamber 22 of the boiler 20. As should be appreciated, the flue gas 23 may include sulfur (often in the form of sulfur oxides, referred to as "SOx"), nitrogen compounds (often in the form of nitrogen oxides, referred to as "NOx"), carbon dioxide (CO₂), water (H₂O) and other trace elements and/or impurities. As shown in FIG. 1, a portion of flue gas 23 generated during combustion in the combustion chamber 22 is passed through a condensing heat exchanger 50. A portion of the flue gas 23 exiting the condensing heat exchanger 50 is returned to the combustion chamber 20 via conduit 52 to primarily fluidize and transport the solids in the combustion chamber 20. In some embodiments, the recirculated flue gas also provides nominal cooling to the combustion chamber, although the primary goal of recirculation is fluidization, and this nominal cooling is not required with minimal temperature moderation of the combustion chamber. In yet further embodiments of the present invention, a portion of the flue gas exiting the condensing heat exchanger 50 is recycled to a fluidized bed type external heat exchanger 40 via conduits 52 and 53 for solids fluidization, however, this step may be omitted with a moving bed type external heat exchanger.

Pollution control typically takes place in the combustion chamber 22. Sulfur dioxide (SO₂) is at least partially removed in-furnace via the injection of the sorbent, e.g., limestone or dolomite, from lockhoppers or other pressurized feeder 32. The relatively low combustion temperature in the embodiment shown in FIG. 1 minimizes NOx emissions. Final sulfur dioxide polishing and particulate cleanup (NID desulfurization system 60 (hereinafter "NID 60"), ESP (not shown), Flowpac (not shown), etc.) can be included downstream of the boiler 20 if desired. Candle filters are also an alternative for final particulate cleanup. Any residual SOx may be removed in the condensing heat exchanger 50.

The disclosed embodiment uses the condensing heat exchanger 50 to recover latent energy (e.g., heat) in the flue gas. The water vapor dew point temperature is about 150 °C at 10 bar in the conduit 54. The recovered energy (e.g, heat) is quite useful at this temperature and can be used to replace much of the extraction steam for the feedwater heaters. The plant 10 includes a plurality of feedwater heaters 70. The plurality of feedwater heaters 70 are in communication (shown generally at 51) with the condensing heat exchanger 50 so that a working fluid 55 of the condensing heat exchanging 50 can be routed to the feedwater heaters 70 to supplement or replace steam extracted from the turbines 58.

The pressurized oxy-combustion CFB cycle (using a conventional Rankine cycle) has net plant efficiencies 3-5% points better than an atmospheric pressure oxy-combustion plant while firing bituminous coals. The efficiency advantage improves by at least another 2% points while firing subbituminous coals because the latent heat in the flue gas can be recovered in the condensing heat exchanger at high temperatures and thus be effectively used in the steam/water cycle. Thermal plant efficiencies will improve by an additional 2% points if the steam conditions are increased to 700 °C.

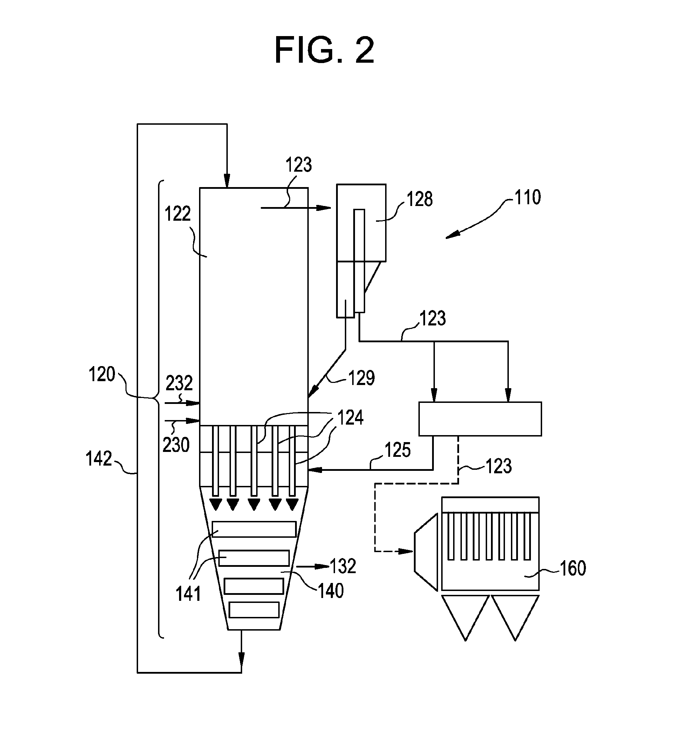

In some embodiments in which a more advanced pressurized oxy-combustion circulating fluidized bed design is employed, supercritical carbon dioxide is heated in the external heat exchanger to drive a supercritical carbon dioxide turbine in a modified Brayton cycle. Steam is still generated in the convective pass to drive the steam turbine in a Rankine bottoming cycle. The cycle efficiency is improved by another 3 percentage points by using supercritical carbon dioxide to drive an S-CO₂ turbine. Coupled with higher turbine inlet temperatures, advanced pressurized oxy-combustion circulating fluidized bed cycles can have thermal efficiencies that match or exceed a super critical power pulverized coal plant without carbon dioxide capture. These efficiency improvements apply also to the pressurized oxy-combustion circulating moving bed 110 shown in FIG. 2 and described below.

In reference to FIG. 2, a schematic illustrating a portion of a pressurized oxy-combustion circulating moving bed power plant 110 is shown. This embodiment includes similar elements to the embodiment shown in FIG. 1, such as the turbines 58 and condensing heat exchanger 50, that are not shown for ease of illustration in FIG. 2. The plant 110 includes a circulating moving bed boiler 120 including a combustion chamber 122 and moving bed heat exchanger 140. The boiler 120 is configured so that the combustion chamber 122 is located in a tower above the moving bed heat exchanger 140 so that solids produced during combustion in the combustion chamber 122 flow downward through tubes 124 into the moving bed heat exchanger 140.

An air separation unit 230 may be in fluid communication with the combustion chamber 122. The air separation unit is configured to supply substantially pure oxygen to the combustion chamber at a pressure greater than 1 bar. In the present embodiment, the air separation unit provides substantially pure oxygen at between 6 bar and 30 bar. The oxygen, and resulting combustion products including flue gas 23, remain pressurized during the power plant cycle. The combustion process produces solids, which flow downward and enter the moving bed heat exchanger 140 and transfer heat to a working fluid 132. After the solids pass through the moving bed heat exchanger 140, the solids are returned via conduit 142 to the combustion chamber 122 to moderate or control a temperature of combustion in the combustion chamber 122.

The approach of the design disclosed in FIG. 2 is to decouple the combustion and heat transfer processes. In the embodiment 110 shown, most of the heat transfer takes place in a moving bed heat exchanger 140. This is a gravity flow heat exchanger that uses extended surface heat transfer tubes 141. This process does not require any flue gas 123 recycle to moderate the temperature of combustion in the combustion chamber 122 because it relies on the cooled stream of solids leaving the moving bed heater exchanger 140 via conduit 142. The falling solids recuperate the energy (e.g., heat) of the combustion gases. In pilot plant tests of this embodiment flue gases 123 exiting the combustion chamber 122 could be as high as 650 °C. With exit temperatures this high, a small back pass is needed to cool the flue gas. However recirculated flue gas 125 may be required to fluidize and transport solids in the combustor.

The pressurized circulating moving bed-based oxy-combustion concept disclosed in FIG. 2 could be used in a Rankine cycle or in a combined Brayton topping and Rankine bottoming cycle that combines a S-CO₂ topping cycle and steam bottoming cycle. CO₂ would be heated in a closed loop in the moving bed heat exchanger 140 to drive a S-CO₂ turbine (not shown in FIG. 2). CO₂ temperatures could be achieved as high as 900 °C, although turbine inlet temperatures this high may require improvements in turbine materials and cooling technology. More modest CO₂ temperatures of 700-800 °C could be more easily attained and would require significantly less turbine development if a conventional steam turbine with Ni-alloys is adapted for CO₂ as the working fluid. In another embodiment, steam/water would also be heated in the moving bed heat exchanger 140 and possibly in a backpass/Heat Recovery Steam Generator (HRSG) downstream of the combustion chamber 122. The steam would be used to drive a Rankine bottoming cycle. A condensing heat exchanger would be used to recover latent energy, which would then be transferred into the steam/water cycle to preheat water (not shown in FIG. 2, but similar to the embodiment shown in FIG. 1 and described above). SOx and NOx emissions are partially controlled in the combustion chamber. SOx polishing typically takes place in a backend NID system 160. Particulate control and recycle 129 would occur in the separator 128 and NID system 160. The gas processing unit (not shown in FIG. 2) cleans up any remaining emissions as the CO₂ is prepared for sequestration.

An alternative approach for emissions control would be to take advantage of lead chamber process reactions in a direct contact condensing heat exchanger. This would require considerable additional development and could be considered as a future improvement to the pressurized oxy-combustion cycle. However, successful development could potentially eliminate the need for low NOx burners, a mercury control system, and the WFGD/DFGD.

One advantage of the presently disclosed pressurized oxy-combustion power plants is that heat transfer rates are enhanced as the pressure is increased. The convective heat transfer coefficient increases by a factor of 4 at 10 bar and the overall heat transfer coefficient by about 3 times greater than at atmospheric pressure. This results in a significant reduction in pressure part material weight.

Another advantage of the presently disclosed pressurized oxy-combustion power plants is the latent heat of vaporization of water vapor can be recovered in a condensing heat exchanger. This is because the water vapor dew point increases significantly at higher pressures and the recovered energy becomes much more useful. The dew point for atmospheric air-fired and oxy-fired combustion is about 45° C and 95° C, respectively. At 10 bar, the dew point temperature increases to about 150 °C for pressurized oxy-combustion. The energy recovered in the condensing heat exchanger can be used to replace much of the extraction steam for the feedwater heaters.

Another advantage of the presently disclosed pressurized oxy-combustion power plants is pollution control in the pressurized oxy-circulating fluidized bed (or circulating moving bed) takes place mostly in the combustion chamber. Sulfur dioxide is removed in-furnace via limestone (or dolomite) injection, while the relatively low combustion temperatures minimize NOx emissions. Final sulfur dioxide polishing and particulate cleanup (NID, ESP, Flowpac, etc) can be included downstream of the combustor. Candle filters are also an alternative for final particulate cleanup. Any residual SOx is substantially removed in the condensing heat exchanger.

Another advantage of the presently disclosed pressurized oxy-combustion power plants, specifically the pressurized oxy-combustion circulating fluidized bed power plant, is that the boiler can use recycle solids from a fluidized bed heat exchange or a moving bed heat exchanger to moderate the temperature of combustion in the combustion chamber of the boiler. Flue gas recirculation is only required for solids fluidization and transport in the combustor and for fluidization in the external heat exchanger if a fluid bed heat exchanger is used.

Another advantage of the presently disclosed pressurized oxy-combustion power plants, specifically those employing the Rankine cycle, is that they result in net plant efficiencies that are 3-5% better than an atmospheric pressure oxy-combustion plant while firing bituminous coals. The efficiency advantage improves by at least another 2% while firing sub-bituminous coals because the latent heat in the flue gas can be recovered in the condensing heat exchanger at high temperatures and thus be effectively used in the steam/water cycle.

Another advantage of the presently disclosed pressurized oxy-combustion power plants is that the external heat exchanger (fluidized bed heat exchange or a moving bed heat exchanger) in the pressurized oxy-circulating fluidized bed (or circulating moving bed) can be used to generate steam. In a more advanced cycle design, supercritical carbon dioxide is heated in the external heat exchanger to drive a supercritical carbon dioxide turbine in a modified Brayton cycle. Steam is still generated in the convective pass to drive the steam turbine in a Rankine bottoming cycle. The cycle efficiency is improved by another 3% by using supercritical carbon dioxide to drive a S-CO₂ turbine. Coupled with higher turbine inlet temperatures, advanced pressurized oxy-combustion cycles can have thermal efficiencies that match or exceed a super critical pulverized coal (SCPC) plant without carbon dioxide capture.

Another advantage of the presently disclosed pressurized oxy-combustion power plants is that equipment size and cost is reduced because of the reduced gas volumetric through put. This provides the potential for significant capital and operating cost savings due to smaller sized equipment, reducing the requirements on the pollution control and GPU equipment.

While the invention has been described with reference to various exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A pressurized oxy-combustion circulating fluidized bed power plant, comprising:
a circulating fluidized bed boiler including a combustion chamber and a separator, the combustion chamber being in fluid communication with the separator and configured so that solids produced during combustion in the combustion chamber enter the separator;
an air separation unit in fluid communication with the combustion chamber, the air separation unit configured to supply substantially pure oxygen to the combustion chamber at a pressure greater than 1 bar; and
an external heat exchanger in fluid communication with the separator and in fluid communication with the combustion chamber, the external heat exchanger being configured so that a portion of the solids received in the separator pass through the external heat exchanger and transfer heat to a working fluid, after which the solids are returned to the combustion chamber to moderate a temperature of combustion in the combustion chamber.

2. The pressurized oxy-combustion circulating fluidized bed power plant of claim 1 wherein the pressure of the substantially pure oxygen supplied from the air separation unit to the combustion chamber is between 6 bar and 30 bar.

3. The pressurized oxy-combustion circulating fluidized bed power plant of claim 2 wherein the external heat exchanger comprises one or more of a fluidized bed head exchanger or a moving bed heat exchanger.

4. The pressurized oxy-combustion circulating fluidized bed power plant of claim 3, further comprising:
a condensing heat exchanger; and
wherein a portion of a flue gas generated during combustion in the combustion chamber is passed through the condensing heat exchanger.

5. The pressurized oxy-combustion circulating fluidized bed power plant of claim 4 wherein latent energy recovered in the condensing heat exchanger is used to supplement steam extracted from a turbine in the power plant for heating feedwater being fed to the boiler.

6. The pressurized oxy-combustion circulating fluidized bed power plant of claim 5, wherein a portion of the flue gas exiting the condensing heat exchanger is returned to the combustion chamber to fluidize and transport solids in the combustion chamber.

7. The pressurized oxy-combustion circulating fluidized bed power plant of claim 6, wherein a portion of the flue gas exiting the condensing heat exchanger is directed to the external heat exchanger for solids fluidization if necessary.

8. A pressurized oxy-combustion circulating moving bed power plant, comprising:
a circulating moving bed boiler including a combustion chamber and moving bed heat exchanger, the boiler being configured so that the combustion chamber is located in a tower above the moving bed heat exchanger so that solids produced during combustion in the combustion chamber flow downward into the moving bed heat exchanger; and
an air separation unit in fluid communication with the combustion chamber, the air separation unit configured to supply substantially pure oxygen to the combustion chamber at a pressure greater than 1 bar;
wherein solids that enter the moving bed heat exchanger transfer heat to a working fluid, after which the solids are returned to the combustion chamber to moderate a temperature of combustion in the combustion chamber.

9. The pressurized oxy-combustion circulating moving bed power plant of claim 8 wherein the pressure of the substantially pure oxygen supplied from the air separation unit to the combustion chamber is between 6 bar and 30 bar.

10. The pressurized oxy-combustion circulating moving bed power plant of claim 9, further comprising:
a condensing heat exchanger.

11. The pressurized oxy-combustion circulating moving bed power plant of claim 9, wherein a portion of a flue gas generated during combustion in the combustion chamber is passed through the condensing heat exchanger.

12. The pressurized oxy-combustion circulating moving bed power plant of claim 11 wherein latent energy recovered in the condensing heat exchanger is used to supplement steam extracted from a turbine in the power plant for heating feedwater being fed to the boiler.

13. The pressurized oxy-combustion circulating moving bed power plant of claim 8, wherein a portion of the flue gas exiting the condensing heat exchanger is returned to the combustion chamber to fluidize and transport solids in the combustor.

14. A method of operating a pressurized oxy-combustion fluidized bed power plant, comprising:
providing a fluidized bed boiler including a combustion chamber and a separator, the combustion chamber being in fluid communication with the separator and configured so that solids produced during combustion in the combustion chamber enter the separator;
supplying substantially pure oxygen to the combustion chamber at a pressure greater than 1 bar; and
passing a portion of the solids received in the separator through an external heat exchanger and transfer heat to a working fluid,
returning the solids to the combustion chamber to moderate a temperature of combustion in the combustion chamber.

15. The method of claim 14 wherein the pressure of the substantially pure oxygen supplied to the combustion chamber is between 6 bar and 30 bar.

16. The method of claim 15 wherein the external heat exchanger comprises one or more of a fluidized bed heat exchanger or a moving bed heat exchanger.

17. The method of claim 16, further comprising the steps of:
providing a condensing heat exchanger; and
passing a portion of a flue gas generated during combustion in the combustion chamber through the condensing heat exchanger.

18. The method of claim 17 wherein latent energy recovered in the condensing heat exchanger supplements steam extracted from a turbine in the power plant for heating feedwater being fed to the boiler.

19. The method of claim 18, further comprising the steps of:
returning a portion of the flue gas exiting the condensing heat exchanger to the combustion chamber to fluidize and transport solids in the combustion chamber.

20. The method of claim 19, wherein a portion of the flue gas exiting the condensing heat exchanger is directed to the external heat exchanger for solids fluidization if necessary.
